(19) Europäisches Patentamt
European Patent Office
Office européen des brevets

(11) Numéro de publication: **0 083 059**
**A1**

(12) # DEMANDE DE BREVET EUROPEEN

(21) Numéro de dépôt: **82111851.0**

(22) Date de dépôt: **21.12.82**

(51) Int. Cl.³: **H 01 M 4/56**
H 01 M 4/62

(30) Priorité: **24.12.81 FR 8124214**

(43) Date de publication de la demande:
**06.07.83 Bulletin 83/27**

(84) Etats contractants désignés:
**AT BE CH DE FR GB IT LI LU NL SE**

(71) Demandeur: **COMPAGNIE EUROPEENNE D'ACCUMULATEURS Société anonyme dite:**
**16, rue de la Baume**
**F-75008 Paris(FR)**

(72) Inventeur: **Mirebeau, Pierre**
**21, rue Jean-Baptiste Corot**
**F-91120 Villebon Sur Yvette(FR)**

(74) Mandataire: **Weinmiller, Jürgen et al,**
**Zeppelinstrasse 63**
**D-8000 München 80(DE)**

(54) **Matière active pour électrodes d'accumulateurs au plomb.**

(57) Cette matière comprend du plomb, ou de l'oxyde de plomb $PbO_2$, ou un mélange de plomb et d'oxyde de plomb.

Elle comporte, en volume, de 15 à 50% d'une matière synthétique conductrice constituée par au moins un polymère dopé par des ions, ledit polymère étant choisi dans le groupe formé par:

— le polypyrrole $(C_4H_3N)_n$, et ses dérivés de formule

dans laquelle $R_1$, $R_2$, $R_3$, qui peuvent être identiques ou différents, sont choisis parmi l'hydrogène, $-OCH_3$, $-SCN$, $-OCN$, $-SR$, R, R désignant un radical alkyle ou aryle, pouvant comporter un ou plusieurs substituants compris dans le groupe formé par $-OCH_3$, $-SCN$, $-OCN$, $NO_2$

— le polypyrrole déshydrogéné, de formule $(C_4H_2N)_n$,

— le polyparaphénylène $(C_6H_4)_n$ et ses dérivés substitués de formule:

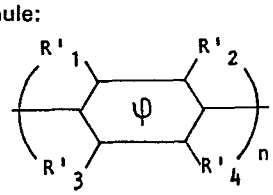

dans laquelle $R'_1$, $R'_2$, $R'_3$, $R'_4$ qui peuvent être identiques ou différents, sont choisis parmi l'hydrogène,

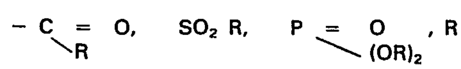

— et le polyacétylène $(CH)_n$.

EP 0 083 059 A1

Matière active pour électrodes d'accumulateurs au plomb

L'invention concerne les matières actives pour électrodes d'accumulateurs au plomb, comportant du plomb, ou de l'oxyde de plomb $PbO_2$, ou un mélange de plomb et d'oxyde de plomb $PbO_2$.

Au cours de la décharge de ces accumulateurs, en présence d'acide sulfurique agissant comme électrolyte, on constate au niveau des électrodes la coexistence de deux phases solides :

- une première phase conductrice correspondant à l'espèce chargée Pb et/ou $PbO_2$
- une seconde phase isolante correspondant à l'espèce déchargée.

Les proportions relatives de ces deux phases varient au cours de la décharge.

La résistance électrique du mélange espèce chargée-espèce déchargée varie donc au cours de la décharge et on constate que cette variation suit une loi du type loi de percolation, ce qui se traduit par un accroissement brutal de la résistance à partir d'un certain seuil. Ce seuil est atteint lorsque le mélange des phases comporte en volume environ 65 à 70% de matière déchargée.

L'utilisation de l'accumulateur n'étant plus possible lorsque ce seuil est atteint, on peut donc considérer que l'électrode comportait en volume, environ 30% à 35% de matière chargée inutile.

Pour améliorer les performances massiques de ces électrodes, on a alors pensé à introduire dans celles-ci du graphite. Toutefois, on a constaté que dans les électrodes positives le graphite se transformait en $CO_2$ qui se dégageait. Pour les électrodes négatives, si l'on a bien constaté une certaine amélioration pour les premières décharges, on s'est aperçu qu'ensuite apparaissaient des problèmes de contrainte entre le graphite et le plomb, qui étaient préjudiciables au bon fonctionnement des accumulateurs.

L'invention permet de remédier à ces inconvénients et d'obtenir des électrodes présentant des performances massiques améliorées, susceptibles de subir des nombreux cycles charge-décharge sans détérioration.

Elle a pour objet une matière active pour électrode d'accumulateurs au plomb, comprenant du plomb, ou de l'oxyde de plomb $PbO_2$, ou un mélange de plomb et d'oxyde de plomb $PbO_2$, caractérisée par le fait

qu'elle comporte, en volume, de 15 à 50% d'une matière synthétique conductrice constituée par au moins un polymère dopé par des ions, ledit polymère étant choisi dans le groupe formé par :

- le polypyrrole $(C_4H_3N)_n$, et ses dérivés substitués de formule

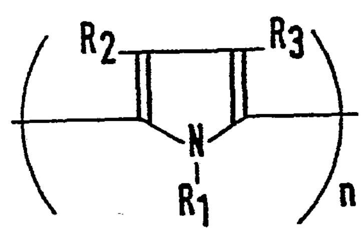

dans laquelle $R_1$, $R_2$, $R_3$, qui peuvent être identiques ou différents, sont choisis parmi l'hydrogène, $-OCH_3$ , -SCN, -OCN, - SR, R, R désignant un radical alkyle ou aryle, pouvant comporter un ou plusieurs substituants compris dans le groupe formé par $-OCH_3$, -SCN, -OCN, $NO_2$,

- le polypyrrole déshydrogéné de formule $(C_4H_2N)_n$,

- le polyparaphénylène $(C_6H_4)_n$ et ses dérivés substitués de formule :

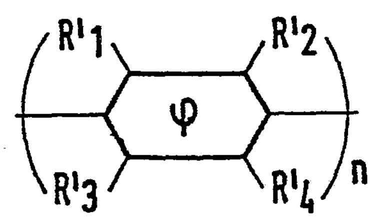

dans laquelle $R'_1$, $R'_2$, $R'_3$, $R'_4$, qui peuvent être identiques ou différents, sont choisis parmi l'hydrogène, $-\underset{\diagdown R}{C} = O$, $SO_2R$, $\underset{\diagdown (OR)_2}{P} = O$ , R

- et le polyacétylène $(CH)_n$.

Le polymère dopé peut être représenté par les formules :

$$\left[(C_4R_1R_2R_3N)^y \ , \ y\,A\right]_n \quad , \quad \left[(C_4H_2N)^y \ , \ yA\right]_n$$

$$\left[(C_6\ R'_1R'_2R'_3R'_4)^y \quad , \ y\ A\right]_n \quad , \quad \left[(CH)^y \quad , \ y\ A\right]_n$$

A étant l'ion dopant, y compris entre 0 et 1, représentant la fraction de A par monomère.

Avantageusement, y est compris entre 0,02 et 0,35.

Selon une caractéristique d'un mode préféré de l'invention, les ions dopant sont accepteurs d'électrons et sont choisis dans le groupe formé par $ClO_4^-$, $FeCl_3^-$, $AsF_5^-$, $SO_4^{--}$, et $HSO_4^-$. Les ions dopants peuvent également être donneurs d'électrons et choisis dans le groupe formé par $Li^+$ et $Na^+$.

Selon un mode d'exécution, ladite matière synthétique est sous forme de poudre dont les grains présentent un diamètre compris entre 1 et 15 $\mu$ m.

Selon un autre mode d'exécution ladite matière synthétique est sous forme de fibres présentant un diamètre compris entre 1 et 15 $\mu$ m.

En fait, l'invention revient à remplacer dans les électrodes selon l'art antérieur la partie de la matière chargée, qui ne réagissait pas, par un matériau inactif vis-à-vis de l'air et de l'électrolyte, présentant une densité inférieure à celle de ladite matière chargée et une conductivité électrique de même ordre.

Ces conditions sont réunies notamment avec le polypyrrole et le polyparaphénylène dont les conductivités se situent vers 80 $ohm^{-1}.\ cm^{-1}$, ainsi que par le polyacétylène.

On doit noter que, sauf en cas de décharges prolongées en dehors des limites d'utilisation normale de l'accumulateur, le polymère introduit dans la matière active n'intervient pas dans la capacité de l'électrode, contrairement à ce que se produit dans le document EP-A1-0036 118 où le polymère lui même constitue la matière active de l'électrode dans son utilisation normale. Selon la présente invention le polymère introduit dans la matière active est électrochimiquement inactif mais conducteur électronique.

L'invention a également pour objet les accumulateurs dont les électrodes comportent de telles matières actives.

La figure annexée représente la variation du rapport $R_a$ de la

conductivité en décharge sur la conductivité initiale en fonction de la variation du pourcentage P de matériau isolant apparaissant dans une électrode d'accumulateur au plomb au cours de la décharge.

Le rapport $R_a$ a été porté en ordonnée et le pourcentage P en abscisse. On s'aperçoit que lorsque ce pourcentage est voisin de 70% le rapport, qui était à l'origine de 1, tend brutalement vers 0.

On a réalisé des électrodes témoins comportant des pâtes classiques ainsi que des électrodes conformes à l'invention et on a mesuré les pourcentages d'utilisation de la matière active en décharge.

Les électrodes témoins ont été obtenues à partir des compositions suivantes :

| | | |
|---|---|---|
| - positive | $H_2SO_4$ (d : 1,40) | 66 cc |
| | $H_2O$ | 120 cc |
| | PbO | 1 kg |
| - négative | $H_2SO_4$ (d : 1,40) | 66 cc |
| | $H_2O$ | 120 cc |
| | PbO | 1 kg |
| | $BaSO_4$ | 0,6 g |
| | vanisperce | 1,5 g |
| | poudre de chêne | 2 g |
| | noir de fumée | 1,5 g |

Les électrodes conformes à l'invention ont été obtenues en introduisant dans ces mélanges, environ 50% en volume, de polypyrrole en poudre dopé par des perchlorates et représenté par la formule :

$$\left[ (C_4H_3\ N)^{+\ 0,33} \quad , \quad 0,33\ (ClO_4)^- \right]_n ,$$

présentant une conductivité de l'ordre de 80 $\Omega^{-1}$ cm $^{-1}$.

Pour les électrodes témoins, on a obtenu un pourcentage d'utilisation de la matière active, d'environ 60%, ce qui pour des électrodes négatives et positives comportant respectivement 3 g de plomb ou de $PbO_2$ se traduit par des capacités respectives de 0,47 Ah et 0,40 Ah.

Pour les électrodes conformes à l'invention, le pourcentage d'utilisation de la matière active était de 85% et les capacités respectives des électrodes négatives et positives de 0,33 Ah et 0,28 Ah.

REVENDICATIONS

1/ Matière active pour électrodes d'accumulateurs au plomb, comprenant du plomb, ou de l'oxyde de plomb $PbO_2$, ou un mélange de plomb d'oxyde de plomb $PbO_2$, c a r a c t é r i s é e par le fait qu'elle comporte, en volume, de 15 à 50% d'une matière synthétique conductrice constituée par au moins un polymère dopé par des ions, ledit polymère étant choisi dans le groupe formé par :

- le polypyrrole $(C_4H_3N)_n$ et ses dérivés substitués de formule

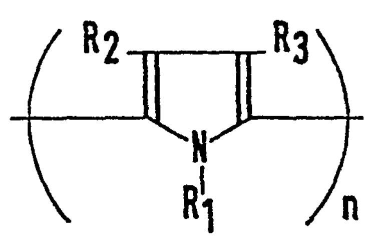

dans laquelle $R_1$, $R_2$, $R_3$, qui peuvent être identiques ou différents, sont choisis parmi l'hydrogène, $-OCH_3$ , -SCN, -OCN, - SR, R, R désignant un radical alkyle ou aryle, pouvant comporter un ou plusieurs substituants compris dans le groupe formé par $-OCH_3$, -SCN, -OCN, $NO_2$,

- le polypyrrole déshydrogéné, de formule $(C_4H_2N)_n$,
- le polyparaphénylène $(C_6H_4)_n$ et ses dérivés substitués de formule :

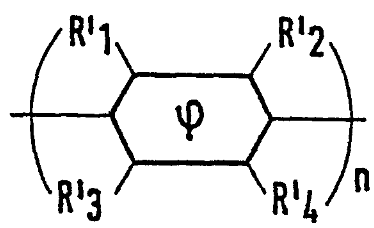

dans laquelle $R'_1$, $R'_2$, $R'_3$, $R'_4$ qui peuvent être identiques ou différents, sont choisis parmi l'hydrogène, $-\underset{\diagdown R}{C}=O$, $SO_2R$, $\underset{\diagdown (OR)_2}{P}=O$ , R

- et le polyacétylène $(CH)_n$.

2/ Matière selon la revendication 1, caractérisée par le fait que le polymère dopé est représenté par les formules :

$$\left[(C_4R_1R_2\ R_3N)^y\ ,\ \ y\ A\right]_n\ ,\qquad \left[(C_4H_2N)^y\ ,\ y\ A\right]_n$$

$$\left[(C_6R'_1R'_2R'_3R'_4)^y\ ,\ \ y\ A\right]_n\ ,\qquad \left[(CH)^y\ ,\ y\ A\right]_n$$

A étant un ion dopant, y compris entre 0 et 1, représentant la fraction de A par monomère.

3/ Matière selon la revendication 2, caractérisée par le fait que y est compris entre 0,02 et 0,35.

4/ Matière selon l'une des revendications 1 à 3, caractérisée par le fait que les ions dopants sont accepteurs d'électrons et choisis dans le groupe formé par $ClO_4^-$, $FeCl_3^-$, $AsF_5^-$, $SO_4^{--}$, et $HSO_4^-$.

5/ Matière selon l'une des revendications 1 à 3, caractérisée par le fait que les ions dopants sont donneurs d'électrons et choisis dans le groupe formé par $Li^+$ et $Na^+$.

6/ Matière selon l'une des revendications 1 à 5, caractérisée par le fait que ladite matière synthétique est sous forme de poudre dont les grains présentent un diamètre compris entre 1 et 15 $\mu$ m.

7/ Matière selon l'une des revendications 1 à 5, caractérisée par le fait que ladite matière synthétique est sous forme de fibres présentant un diamètre compris entre 1 et 15 $\mu$ m.

8/ Accumulateur au plomb dont les électrodes comportent la matière active selon l'une des revendications 1 à 7.

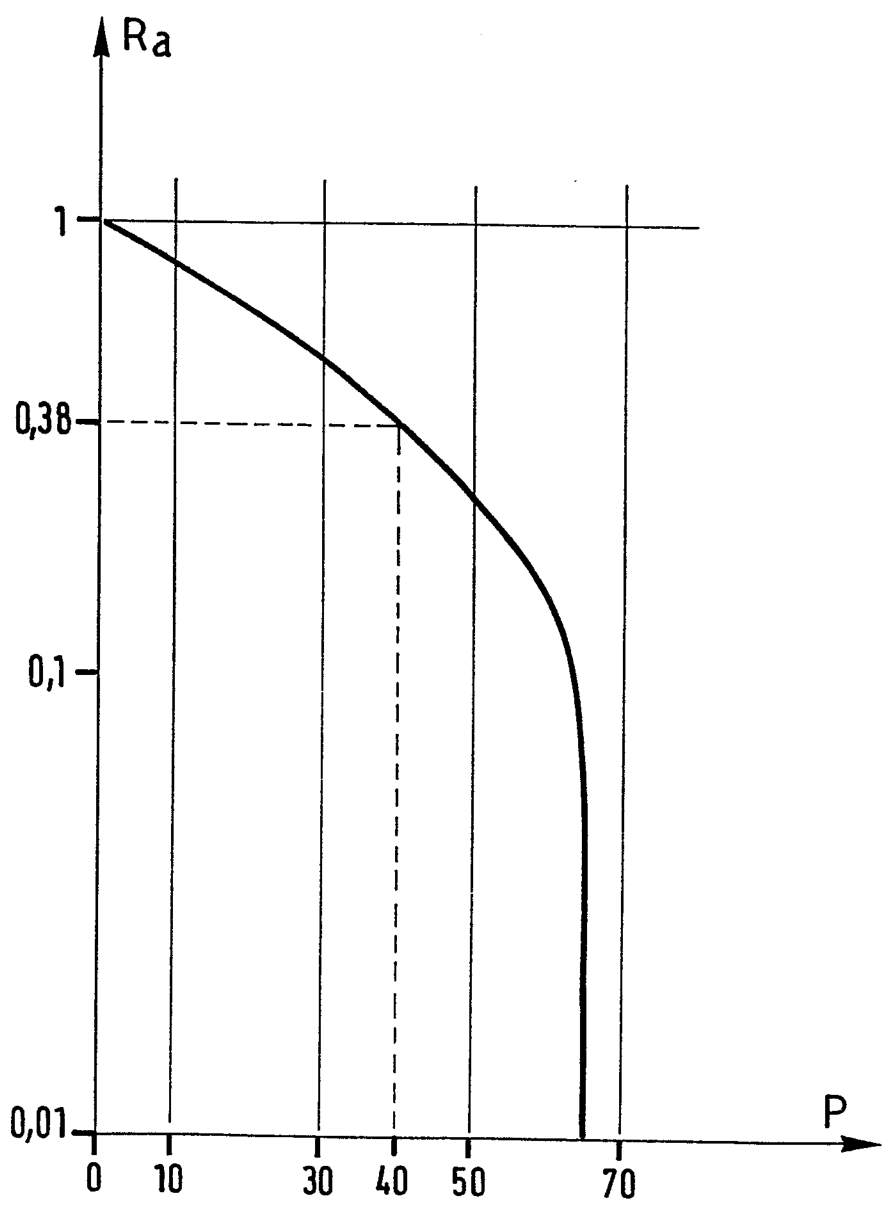
Ra
1
0,38
0,1
0,01
P
0
10
30
40
50
70

0083059

Office européen des brevets

# RAPPORT DE RECHERCHE EUROPEENNE

Numéro de la demande

EP 82 11 1851

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,A | EP-A-0 036 118 (UNIVERSITY PATENTS INC.) *Revendications 1,2,3,10,11,13; pages 5,9,10,11,14,28* |  | H 01 M 4/56<br>H 01 M 4/62 |
| A | US-A-4 222 903 (A.J.HEEGER, A.G.McDIARMID) *Revendications 1,5; colonne 1, lignes 15-20* |  |  |
| A | FR-E- 94 536 (CENTRE NATIONAL DE LA RECHERCHE SCIENTIFIQUE) *Page 5, colonne de gauche, paragraphe 1, colonne de droite, dernier paragraphe* |  |  |
| A | FR-A-1 063 719 (R.BOSCH) *Résumé points 2,4* |  | **DOMAINES TECHNIQUES RECHERCHES (Int. Cl. 3)** |
| A | US-A-2 514 415 (C.H.RASCH) *Colonne 3, lignes 3-17* |  | H 01 M 4/62<br>H 01 M 4/56<br>H 01 M 4/20<br>H 01 M 4/36<br>H 01 M 4/14<br>H 01 M 4/60 |

Le présent rapport de recherche a été établi pour toutes les revendications

| Lieu de la recherche | Date d'achèvement de la recherche | Examinateur |
|---|---|---|
| LA HAYE | 11-03-1983 | D'HONDT J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82